# EUROPEAN PATENT APPLICATION

(11) **EP 2 028 706 A1**
(43) Date of publication of application: **25.02.2009**
(21) Application number: 08252598.1
(22) Date of filing: 31.07.2008
(51) Int. Cl.: H01M 4/92, H01M 8/10

(54) **Catalyst-loaded support used for forming electrode for fuel cell, and method of producing the same**

(30) Priority: 02.08.2007 JP 2007201702
(71) Applicant: Toyota Jidosha Kabushiki Kaisha, Toyota-shi, Aichi-ken 471-8571 (JP)
(72) Inventor: Obata, Takeshi, Toyota-shi, Aichi-Ken 471-8571 (JP)
(74) Representative: Duckworth, Timothy John

(57) **Abstract**

Pt-loaded carbon particles loaded with a catalyst (platinum: Pt) according to a suitable catalyst loading method, such as a colloid method, are subjected to an aldehyde treatment or an acid treatment, or the like, so that hydroxyl groups are introduced into surfaces of the Pt-loaded carbon particles. Then, (1,1-diphenyl-4-pentenyl) benzene containing a benzene group as a hydrophobic functional group is chemically bound to carbon particle sites into which the hydroxyl groups have been introduced, through radical polymerization. The (1,1-diphenyl-4-pentenyl) benzene has a high-volume molecular structure, and the benzene groups as the hydrophobic functional groups exist above surface regions of the Pt-loaded carbon particles on which the catalyst particles are not supported, so as to repel water from the Pt-loaded carbon particles.

## Description

### BACKGROUND OF THE INVENTION

### 1. Field of the Invention

This invention relates to a catalyst-loaded support contained in an electrode that is joined to an electrolyte membrane of a polymer electrolyte fuel cell, a method of producing the support, and a polymer electrolyte fuel cell including the electrode containing the catalyst-loaded support.

### 2. Description of the Related Art

The cell performance of a polymer electrolyte fuel cell depends on the progress of electrochemical reactions at electrodes joined to an electrolyte membrane. To promote the electrochemical reactions at the electrodes, carbon particles (electrically conductive support particles) loaded with a catalyst, such as platinum, are mixed, along with a proton-conducting electrolyte, in the electrodes. The catalyst contained in the electrodes causes the electrochemical reactions to proceed at an interface (which is also called "three-phase interface") between the catalyst and reaction gas supplied to the electrodes.

Where the fuel cell is installed on a vehicle, for example, the fuel cell is forced to be repeatedly turned on and off, and is inevitably operated under circumstances where there is a shortage of hydrogen as fuel gas. Under the circumstances, catalyst-loaded carbon particles contained in a cathode-side electrode are likely to be exposed to a high potential and water, resulting in corrosion of the carbon particles, as known in the art. The corrosion of the carbon particles may induce falling-off of fine catalyst particles from the carbon particles, or an increase in the electrical resistance of the carbon particles, which leads to deterioration of the cell performance. Thus, various methods or devices have been proposed for preventing corrosion of carbon particles serving as catalyst-loaded support particles (as disclosed in, for example, Japanese Patent Application Publication No. 2002-273224 (JP-A-2002-273224)). If the carbon particles have structural defects, the reactivity is high at the defect sites, and therefore, the above-described corrosion is likely to occur at the defect sites.

According to the related art as disclosed in JP-A-2002-273224 and Japanese Patent Application Publication No. 2004-172107 (JP-A-2004-172107), the resistance to corrosion may be improved by reducing defect sites through heat treatment of the support at high temperatures for crystallization of carbon, or coating the support with a metal carbide, and thus corrosion of the carbon particles may be effectively prevented. According to the related art as disclosed in Japanese Patent Application Publication No. 2003-109605 (JP-A-2003-109605) and Japanese Patent Application Publication No. 11-25992 (JP-A-11-25992), a water repellent is applied by spraying to surfaces of carbon particles, or a water-repellent layer is formed on surfaces of carbon particles, for control of water around the carbon particles, so that corrosion of the carbon particles can be effectively prevented by inhibiting or restricting contact of the carbon particles with water. However, there is still some room for further improvements in connection with the prevention of the corrosion, as will be described below.

As the crystallization of carbon proceeds, the surface area of the particles that can support the catalyst is reduced. As a result, the catalyst is less likely to be loaded on the carbon particles, and the progress of the electrochemical reaction caused by the catalyst is retarded, which may result in deterioration of the cell performance. In the meantime, metal carbides are easily oxidized, in the presence of water and air, into metal oxides. Since the metal carbide undergoes a relatively large change in its crystalline structure when converted to the metal oxide, a large stress is developed at an interface between the metal oxide and the carbon particles. As a result, structural defects are likely to be created at the interface. Also, since the metal oxide becomes a source of oxygen supplied to the carbon particles, the above-mentioned defects tend to be hydrophilic defects due to the presence of oxygen. The hydrophilic defects, to which water is attracted, may cause corrosion of the carbon particles, resulting in a reduced effect of preventing corrosion.

The above-mentioned water repellent is applied to the carbon particles by spraying, or the water-repellent layer is formed using a solution. Thus, the deposition of the water repellent or formation of the water-repellent layer cannot avoid defects or damages caused by physical force due to flow of gas supplied to the electrode, resulting in a reduced effect of preventing corrosion.

### SUMMARY OF THE INVENTION

The invention provides a catalyst-loaded support having improved durability, or resistance to corrosion, of support particles to be loaded with a catalyst.

A first aspect of the invention relates to a catalyst-loaded support contained in an electrode joined to an electrolyte membrane of a polymer electrolyte fuel cell. The catalyst-loaded support includes a support particle having electrical conductivity, which is to be loaded with a catalyst, a fine catalyst particle as the catalyst supported on a surface of the support particle, and a hydrophobic-group containing compound containing a hydrophobic function group and chemically bound to the support particle on a surface region of the support particle on which the catalyst particle is not supported, such that the hydrophobic functional group exists above the surface of the support particle.

In the catalyst-loaded support constructed as described above, the catalyst is supported on the surface of the conductive support particle (for example, a carbonaceous particle, such as a carbon particle), while the hydrophobic-group containing compound is chemically bound to the support particle at a surface region where the catalyst is not supported, such that the hydrophobic function group contained in the hydrophobic-group containing compound exists above the catalyst-unloaded surface region of the support particle. With this arrangement, the hydrophobic functional group functions to repel water from the catalyst-loaded support, and retards or inhibits a reaction between the support and water at a high potential, so that corrosion of the support particles can be suppressed or prevented. Furthermore, the hydrophobic-group containing compound, which is bound to the support particles, is not involved in crystallization of the particles, and thus does not cause a reduction of the surface area of the support particles. Also, even if oxidation of the hydrophobic-group containing compound occurs, the chemical bond between the hydrophobic-group containing compound and each support particle is cut off, namely, only a part of the compound is cut off due to the oxidation, and no stress is produced as in the case of oxidation and transformation of metal carbides as described above. Namely, the oxidation does not cause defects to be formed on the support particles. Furthermore, since the hydrophobic-group containing compound and the support particles are chemically bound to each other, the hydrophobic-group containing compound is not likely to be removed from the surfaces of the support particles even when receiving physical force due to flow of gas supplied to the electrode. As a result, the catalyst-loaded support constructed as described above achieves highly effective prevention of corrosion of the conductive support particles on which the catalyst is loaded, thus assuring enhanced durability, or resistance to corrosion. Consequently, the fuel cell in which electrodes containing the catalyst-loaded support constructed as described above are joined to an electrolyte membrane maintains the cell performance for a prolonged period of time.

In this case, the hydrophobic-group containing compound may have a high-volume molecular structure. If the hydrophobic-group containing compound has a high-volume molecular structure, water is more effectively repelled or kept away from the catalyst-loaded support, and the reaction between the support and water at a high potential is more likely to be retarded or inhibited, thus assuring further improved durability or resistance to corrosion. The hydrophobic-group containing compound may contain a functional group selected from the group consisting of a tertiary butyl group, a benzene group; a naphthalene group, a triphenyl group, a fluorenyl group, and substituents thereof, as said hydrophobic functional group.

A second aspect of the invention relates to a method of producing a catalyst-loaded support contained in an electrode joined to an electrolyte membrane of a polymer electrolyte fuel cell. The method includes a step of subjecting an electrically conductive, support particle loaded with a fine catalyst particle, to a treatment for introducing a hydroxyl group into the support particle, a step of introducing the hydroxyl group into a surface region of the support particle on which the catalyst particle is not supported, and a step of chemically binding a hydrophobic-group containing compound containing a hydrophobic functional group to the support particle, through a polymerization reaction between the hydrophobic-group containing compound and the hydroxyl group that has been introduced into the surface region of the support particle.

In the production of the catalyst-loaded support according to the method as described above, the hydrophobic-group containing compound containing the hydrophobic functional group is chemically bound to the support particles that have been loaded with fine catalyst particles, and therefore, the chemical bonding of the hydrophobic-group containing compound has no influence on loading of the support with the catalyst particles. With the loading of the catalyst particles thus ensured, a shortage of the catalyst can be avoided, and the cell performance of a fuel cell in which electrodes containing the catalyst-loaded support are joined to an electrolyte can be maintained with reliability. Also, the hydrophobic-group containing compound is bound to the support particles that have been loaded with the catalyst particles, and is thus located at surface regions of the support particles where the catalyst particles are not supported. It is thus possible to easily produce the catalyst-loaded support in which the hydrophobic-group containing compound is chemically bound to the support particles at the catalyst-unloaded surface regions thereof. Furthermore, if structural defect sites are present on the surface regions of the support particles on which the catalyst particles are not supported, the hydrophobic-group containing compound is likely to be bound to the defect sites having high reactivity, whereby the defect sites are filled with the compound bound to the particles, which is desirable in terms of prevention of corrosion.

The conductive support particles loaded with the catalyst particles may be obtained by acquiring commercially available support particles that have been loaded with the catalyst, or loading catalyst particles on surfaces of electrically conductive support particles by a suitable method.

The present invention may be implemented in various forms. For example, the invention may be implemented in the form of, for example, a method of producing an electrolyte solution used for forming an electrode joined to an electrolyte membrane of a polymer electrolyte fuel cell, more specifically, a method of producing an electrolyte solution in which support particles loaded with catalyst particles, to which the hydrophobic-group containing compound has been chemically bound, are dispersed, a polymer electrolyte fuel cell having an electrode formed by using the electrolyte solution and an electrolyte membrane, and a method of producing the fuel cell.

### BRIEF DESCRIPTION OF THE DRAWINGS

The foregoing and further objects, features and advantages of the invention will become apparent from the following description of embodiments with reference to the accompanying drawings, wherein like numerals are used to represent like elements, and wherein:
FIG. 1 is an explanatory view schematically illustrating the construction of a fuel cell according to one embodiment of the invention;
FIG. 2 is a flowchart illustrating the process of producing the fuel cell of the embodiment of FIG. 1;
FIG. 3 is an explanatory view schematically illustrating a catalyst-loaded support (carbon particle) used for forming an electrode;
FIGS. 4A, 4B and 4C are explanatory views each schematically showing the molecular structure of a compound containing a hydrophobic functional group, which is to be bound to the catalyst-loaded support (carbon particle) of FIG. 3; and
FIG. 5 is a graph showing changes in the output voltage with time, with respect to a cell element of the embodiment and that of a comparative example.

### DETAILED DESCRIPTION OF THE EMBODIMENTS

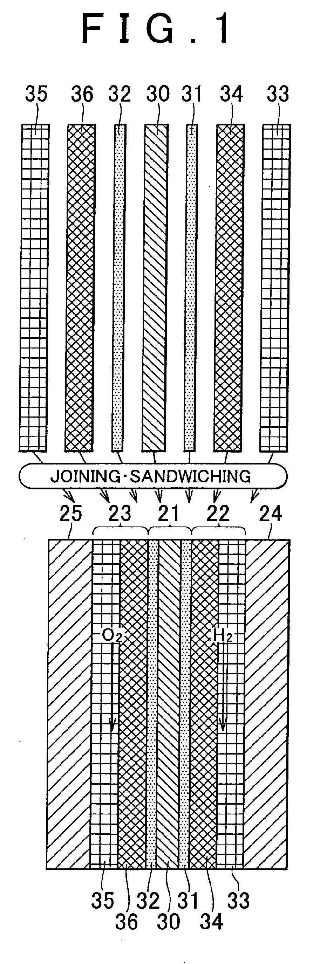

One embodiment of the invention will be described with reference to the drawings. FIG. 1 is an explanatory view schematically illustrating the construction of a fuel cell according to the embodiment of the invention. The fuel cell of this embodiment is a polymer electrolyte fuel cell, and has a stacked structure in which a plurality of power generation units (which may also be called "unit cells" or "cells"), one of which is shown in FIG. 1, are stacked together. The power generation unit has a membrane electrode assembly (MEA) 21 including an electrolyte, and gas diffusion layers 22, 23 between which the membrane electrode assembly 21 is sandwiched, to form a MEA-sandwiching structure. The MEA-sandwiching structure is sandwiched between separators 24, 25 disposed on the opposite sides thereof.

The membrane electrode assembly 21 includes an electrolyte layer 30, and a pair of electrodes 31, 32 joined to the opposite surfaces of the electrolyte layer 30 such that the electrolyte layer 30 is interposed between the electrodes 31, 32. The electrolyte layer 30 is a proton-conducting ion exchange membrane formed of a solid polymer material, such as fluororesin, and exhibits good electrical conductivity under wet conditions. In this embodiment, a Nafion membrane (manufactured by DuPont) is used as the electrolyte layer 30. Each of the electrodes 31, 32 has a porous structure formed of a highly conductive material containing a catalyst, and provides a catalyst electrode having gas permeability. To form the electrodes, this embodiment uses an electrolyte solution prepared by mixing a powdered support (e.g., carbon particles) loaded with a catalyst, such as platinum or an alloy of platinum and other metal, which promotes electrochemical reactions, with an electrolyte (the same Nafion solution as used for the electrolyte layer 30 in this embodiment) similar in properties to the electrolyte layer 30, such that the catalyst support is dispersed in the solution. From the electrolyte solution, the electrodes 31, 32 are formed like films or membranes on the opposite surfaces of the electrolyte layer 30. The manners of producing the electrodes 31, 32 and the catalyst-loaded support (carbon particles) contained in the electrodes 31, 32 will be described in detail later.

Each of the gas diffusion layers 22, 23 is constructed of a structural component having gas permeability and electron conductivity. For example, the gas diffusion layers 22, 23 may be formed from a carbon material, such as carbon paper, or a metallic member, such as a metal foam or a metal mesh. The gas diffusion layers 22, 23 serve to supply gas used for electrochemical reactions to the electrodes 31, 32, and collect current from the electrodes 31, 32. The gas diffusion layer 22 includes a gas diffusion member 33 that is in contact with the separator 24, and an electrode-side gas diffusion member 34 that is in contact with the membrane electrode assembly 21. The gas diffusion layer 22 forms an intra-cell fuel gas channel through which a fuel gas containing hydrogen passes, between the membrane electrode assembly 21 and the separator 24, so that the fuel gas is supplied to the electrode 31. The gas diffusion layer 23 includes a gas diffusion member 35 that is in contact with the separator 25, and an electrode-side gas diffusion member 36 that is in contact with the membrane electrode assembly 21. The gas diffusion layer 23 forms an intra-cell oxidizing gas channel through which an oxidizing gas containing oxygen passes, between the membrane electrode assembly 21 and the separator 25, so that the oxidizing gas is supplied to the electrode 32.

While each of the gas diffusion layers 22, 23 consists of the separator-side gas diffusion member and electrode-side gas diffusion member that are joined to each other in this embodiment, the gas diffusion layer 22, 23 may be formed as a single-layer gas diffusion layer.

In the gas diffusion layers 22, 23 as described above, the separator-side gas diffusion members 33, 35 may be formed of porous bodies having a higher hardness than those of the electrode-side gas diffusion layers 34, 36. The hardness mentioned herein does not mean the hardness of the material of which the gas diffusion member is formed, but means the hardness of the member as a whole, and may be represented by, for example, the compressive modulus of elasticity. The formation of the gas diffusion layers 22, 23 in this manner contributes to preservation of the shape of the cell.

The separators 24, 25 are gas-impermeable components formed of a material having electron conductivity, and may be formed of, for example, a metal, such as stainless steel, or a carbon material. While the separators 24, 25 of this embodiment are in the form of thin plates or films, and their surfaces contacting the gas diffusion layers 22, 23 are formed as flat surfaces having no recesses and protrusions, separators having a fuel gas channel or oxidizing gas channel may also be used. In this case, the gas diffusion layers need not provide intra-cell fuel gas channels or intra-cell oxidizing gas channels, but may only serve to diffuse gas.

In a peripheral portion of the cell as the power generation unit shown in FIG. 1, seal members, such as gaskets, are provided for ensuring gastight sealing of the intra-cell fuel gas channel and intra-cell oxidizing gas channel. Also, in the cell peripheral portion, a plurality of gas manifolds (not shown) through which fuel gas or oxidizing gas flows are formed in parallel with the direction in which the cells are stacked. In operation, the fuel gas that flows through a fuel gas supply manifold, as one of the above-mentioned gas manifolds, is distributed to each cell, passes through the intra-cell fuel gas channel (gas diffusion layer 22) for use in an electrochemical reaction, and is then collected into a fuel gas discharge manifold as one of the gas manifolds. Similarly, the oxidizing gas that flows through an oxidizing gas supply manifold is distributed to each cell, passes through the intra-cell oxidizing gas channel (gas diffusion layer 23) for use in an electrochemical reaction, and is then collected into an oxidizing gas discharge manifold. In FIG. 1, the fuel gas (H₂) and the oxidizing gas (O₂) flow through the intra-cell fuel gas channel and the intra-cell oxidizing gas channel, respectively, in the same direction in parallel with each other. However, these gases may flow in different directions, for example, in opposite directions or in directions orthogonal to each other, as well as in the same direction, depending on the arrangement or locations of the gas manifolds.

As the fuel gas supplied to the fuel cell, hydrogen-rich gas obtained by reforming hydrocarbon fuel, or high-purity hydrogen gas, may be used. As the oxidizing gas supplied to the fuel cell, air may be used.

Although not illustrated in FIG. 1, a coolant channel through which a coolant passes may be provided between each pair of adjacent unit cells, or each time a certain number of cells are stacked, for adjusting the internal temperature of the stacked structure. The coolant channel may be provided between adjacent unit cells, more specifically, between the separator 24 of one of the cells and the separator 25 of the other cell.

The cell is not limited to the layered structure as shown in FIG. 1, but may be constructed otherwise. For example, the membrane electrode assembly 21 may be sandwiched between separators disposed on the opposite sides thereof, and hydrogen-gas/air supply channels may be formed in surfaces of the separators that face the membrane electrode assembly 21.

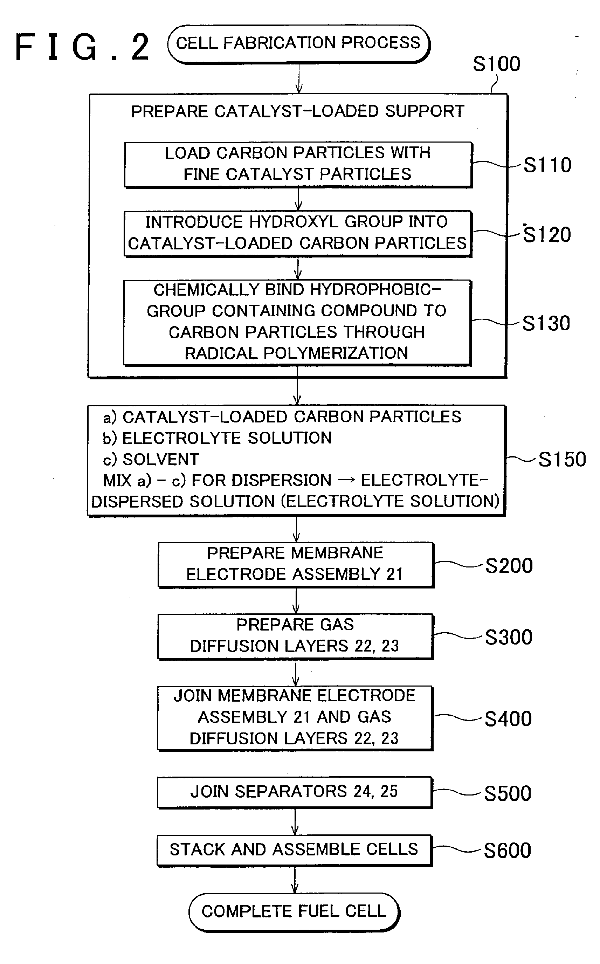

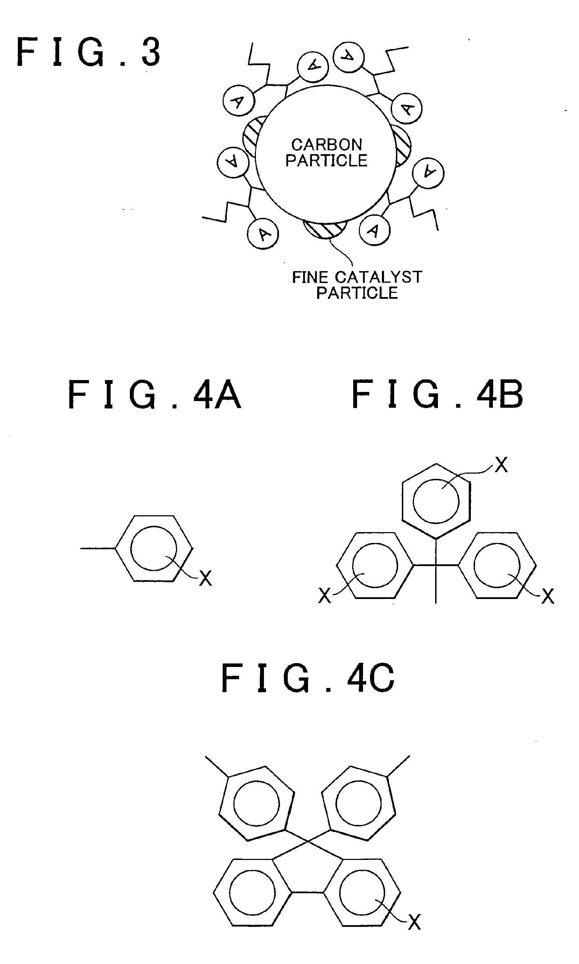

Next, the process of manufacturing the fuel cell constructed as described above will be described. FIG. 2 is a flowchart illustrating the process of manufacture for the fuel cell of this embodiment, and FIG. 3 is an explanatory view schematically showing a catalyst-loaded support (carbon particle) used for forming the electrodes. FIGS. 4A, 4B, 4C are explanatory views each schematically showing the molecular structure of a compound containing a hydrophobic functional group(s), which is to be bound to the catalyst-loaded support (carbon particle) as shown in FIG. 3.

As shown in FIG. 2, in the process of manufacturing the fuel cell according to this embodiment, a catalyst-loaded support (carbon particles) is initially prepared (step S100). In this step, carbon particles are first loaded with fine catalyst particles (step S110). The carbon particles used in this step are not particularly specified, but may be selected from various materials, such as carbon black and graphite. The catalyst is not particularly specified, but may be selected from various catalysts including noble metals, such as platinum, and alloys thereof. Also, various methods, such as a colloid method, may be employed as a method of loading the carbon particles with the catalyst particles. In the colloid method, a compound containing a noble metal (hereinafter called "noble metal source"), which can be dissolved in a suitable solvent, is dissolved in the solvent, and carbon particles are immersed or dispersed in the solution, so that the noble metal is deposited on the surfaces of the carbon particles. In this case, a reagent for precipitation of noble metal atoms out of the noble metal source may be added to the solution as needed, or the carbonaceous support separated from the solution may be subjected to a reducing process under certain conditions.

In this embodiment, fine Pt (platinum) particles were used as the fine catalyst particles, and loading of the catalyst was carried out in the following manner. Initially, 3g of hexahydroxy platinic acid (H₂Pt(OH)₆) was dispersed in 300ml of pure water, and 100ml of a 6% aqueous solution of sulfurous acid (H₂SO₃) was charged into this, and stirred for 1 hour. The resulting solution was then heated to 120°C for removal of the remaining sulfurous acid, and pure water was added to the solution to provide 500ml of Pt solution (equivalent to 4g-Pt/L).

Subsequently, carbon black (carbon particles) was weighed or measured, and dispersed into water, and the Pt solution was charged into the carbon-particle-dispersed liquid such that the weight ratio of Pt (catalyst) to the carbon particles becomes equal to 1:1. Then, 50ml of a 20% aqueous solution of H₂O₂ was added to this solution, and the resulting solution was heated at 120°C for 1 hour, so that Pt was loaded on the surfaces of the carbon particles. After the solution in which the Pt-loaded carbon particles were dispersed was filtered, the resulting substance was washed with pure water, dried in a vacuum at room temperature, crushed, and finally reduced in a hydrogen stream at 200°C for two hours, to provide Pt-loaded carbon particles. The Pt-loaded carbon particles may be regarded as support particles of the catalyst-loaded support of the invention.

The loading of the catalyst on the support (e.g., carbon particles) may be performed by a generally adopted method, such as impregnation or coprecipitation, or an ion exchange method, as well as the above-mentioned colloid method. Also, the Pt-loaded carbon particles may be acquired from commercially available carbon particles that have been loaded with platinum (Pt) as a catalyst. The weight ratio of Pt (catalyst) to the carbon particles may be equal to a value other than the above-indicated ratio (1:1).

Subsequently, the thus obtained Pt-loaded carbon particles are subjected to an aldehyde treatment in which they are treated with formaldehyde, or are subjected to an acid treatment in which they are treated with an acid, such as sulfuric acid, or the like, so that hydroxyl groups are introduced into the surfaces of the carbon particles (step S120). Since the carbon particles subjected to the treatment have been loaded with the catalyst, the introduction of the hydroxyl group takes place at surface regions of the carbon particles on which the catalyst particles are not supported (which may also be called "catalyst-unloaded surface regions"). In this case, if the carbon particle has structural defects, it is assumed that the catalyst is loaded on the defect sites having high reactivity during the catalyst-loading step. If any defect site or sites remain on the catalyst-unloaded surface region of the carbon particle, the introduction of the hydroxyl group is most likely to occur at the defect site(s).

Subsequent to the hydroxyl-group introduction as described above, the solution used in the hydroxyl-group introduction step and a solution of a compound containing a hydrophobic functional group, for example, (1,1-diphenyl-4-pentenyl) benzene) as a hydrophobic-group containing compound containing a benzene group as the hydrophobic functional group, are mixed together and stirred. As a result, radical polymerization based on an oxidation-reduction reaction between the hydrophobic-group containing compound and the hydroxyl group proceeds, so that (1,1-diphenyl-4-pentenyl) benzene is bound to the carbon particle sites into which the hydroxyl group has been introduced (step S130). The bonding of (1,1-diphenyl-4-pentenyl) benzene with the carbon particles is a chemical bonding since it results from the radial polymerization based on the oxidation-reduction reaction between the hydrophobic-group containing compound and the hydroxyl group. Also, the bonding of (1,1-diphenyl-4-pentenyl) benzene occurs at regions where the hydroxyl group has been introduced, of the surface of the Pt-loaded carbon particle, namely, at the catalyst-unloaded surface regions of the carbon particle. Therefore, (1,1-diphenyl-4-pentenyl) benzene is most likely to be chemically bound to the defect sites of the Pt-loaded carbon particle as described above.

As schematically shown in FIG. 3, (1,1-diphenyl-4-pentenyl) benzene is chemically bound to the Pt-loaded carbon particle such that benzene groups as hydrophobic functional groups are present at the surface regions of the Pt-loaded carbon particle where the catalyst particles are not supported. The benzene group, which has a high-volume molecular structure, is spaced apart from the surface of the Pt-loaded carbon particle as if it floats over the particle surface, so as to cover the particle surface, as indicated by symbol A in FIG. 3. Thus, the benzene groups as hydrophobic functional groups exist above the surface of the Pt-loaded carbon particle, so as to repel water from the Pt-loaded carbon particle. Furthermore, since the surface of the Pt-loaded carbon particle is covered with the high-volume benzene groups, such that the benzene groups are spaced apart from the particle surface, water may be blocked by the benzene groups as high-volume hydrophobic functional groups, to be kept away or repelled from the Pt-loaded carbon particle.

The (1,1-diphenyl-4-pentenyl) benzene having the benzene group may be replaced with compounds as shown in FIG. 4A - FIG. 4C. For example, a compound having a tertiary butyl group or a benzene substituent as shown in FIG. 4A, or a compound having a triphenyl substituent as shown in FIG. 4B, or a compound having a fluorenyl substituent as shown in FIG. 4C, may be chemically bound to the Pt-loaded carbon particle. In FIG. 4A through FIG. 4C, X represents hydrocarbon or fluorocarbon, and the carbon is chemically bound to the Pt-loaded carbon particle. Since each of these compounds also has a high-volume molecular structure, the compound exists as if it floats over the surface of the Pt-loaded carbon particle, so as to cover the particle surface.

In the step of binding the hydrophobic-group containing compound to the carbon particles, the solution is filtered, and is then washed with water and dried, so as to provide Pt-loaded carbon particles in the form of a powder.

In the following step S150, an electrolyte solution for forming the electrodes is prepared. In this step, the Pt-loaded carbon particles as described above and an electrolyte solution containing a proton-conducting electrolyte are mixed with a suitable solvent, to provide an electrolyte-dispersed solution in which the Pt-loaded carbon particles are dispersed. In this embodiment, a Nafion solution, which is an electrolyte solution containing the same electrolyte as that of the electrolyte layer 30, for example, Nafion Solution available from Aldrich Chemical, is used as the electrolyte solution. As the solvent, distilled water and a suitable organic solvent, such as ethanol or propylene glycol, are used. To promote dispersion of the catalyst-loaded carbon particles, a dispersing device, such as an ultrasonic homogenizer, is preferably used.

In the preparation of the electrolyte-dispersed solution as described above, the Pt-loaded carbon particles and the Nafion solution are weighed or measured so that the weight ratio of the Nafion solution and the catalyst-loaded carbon particles becomes equal to a generally adopted ratio, and a certain amount of the above-mentioned solvent is added to and mixed with the Nafion solution and the carbon particles for dispersion thereof. While the ratio of the distilled water to the organic solvent is suitably determined, the ratio is desirably in the range of about 1:2 - 3:1.

Subsequent to the preparation of the electrolyte-dispersed solution, the membrane electrode assembly 21 is fabricated using the thus prepared electrolyte-dispersed solution (step S200). More specifically, the electrolyte-dispersed solution is applied by coating to the front and rear surfaces of the electrolyte layer 30 by a suitable film forming method, such as a doctor blade method or screen printing, so as to form the electrodes 31, 32 on the opposite sides of the electrolyte layer 30. In another example, sheets may be produced by forming films from the electrolyte-dispersed solution, and the sheets may be pressed onto the electrolyte layer 30 so as to form the electrodes 31, 32 joined to the electrolyte layer 30. In a further example, the electrolyte-dispersed solution may be applied by coating to strippable sheets (e.g., Teflon sheets: Teflon is a registered trademark), and dried, to thus form electrode transfer sheets from the electrolyte-dispersed solution. Then, the electrolyte layer 30 is sandwiched between the two electrode transfer sheets so that the electrode transfer sheets are joined to the opposite surfaces of the electrolyte layer 30, and the electrode transfer sheets are bonded to the electrolyte layer 30 by thermocompression bonding at a certain temperature under a certain pressure. Thereafter, the Teflon sheets are stripped off from the electrode transfer sheets. Thus, the electrodes transferred by means of the electrode transfer sheets are formed on the opposite surfaces of the electrolyte layer 30. In the formation of the electrodes as described above, the electrolyte-dispersed solution is used as an electrode forming paste.

Subsequently, the gas diffusion layer 22 and the gas diffusion layer 23 are fabricated by joining the gas diffusion member 33 and the electrode-side gas diffusion member 34 to each other, and joining the gas diffusion member 35 and the electrode-side gas diffusion member 36 to each other (step S300). The gas diffusion members may be joined to each other by a suitable joining method, such as a press, without impairment of the gas diffusion capability thereof.

Next, the membrane electrode assembly 21, gas diffusion layer 22 and the gas diffusion layer 23 are joined together such that the membrane electrode assembly 21 is sandwiched between the gas diffusion layers 22, 23 (step S400). Here, the adjacent two members are joined to each other such that the two members are positively adhered to each other, to provide an increased area of contact therebetween, as compared with the case where the two members are merely laminated on each other. The membrane electrode assembly 21 and the electrode-side gas diffusion members 34, 36 of the gas diffusion layers 22, 23 on the opposite sides of the assembly 21 may be joined to each other by, for example, hot press or thermocompression bonding. Through application of heat and pressure, the above-mentioned electrode forming paste (the electrolyte-dispersed solution that has been subjected to hot isostatic pressing) that constitutes the electrodes 31, 32 is softened by heat, and the softened electrode forming paste conforms to the entire areas of the porous surfaces of the electrode-side gas diffusion members 34, 36, for an increase in the contact area, so that the electrodes 31, 32 are bonded under pressure to the gas diffusion members 34, 36.

Subsequently, the separators 24, 25 are joined to the gas diffusion layers on the opposite sides of the membrane electrode assembly 21 (step S500). Then, a certain number of assemblies each comprising the membrane electrode assembly 21, gas diffusion members 22, 23 and the separators 24, 25 are stacked together in a certain order (to repeatedly form the cell of FIG. 1), to provide the above-mentioned stacked structure, and a certain pressure is applied to the stacked structure in the stacking direction so as to retain the whole structure. In this manner, the fuel cell is completed (step S600). In this case, the separators 24, 25 may be joined to the gas diffusion members 33, 35 of the gas diffusion layers 22, 23 by a suitable method, such as welding. The welding process may be carried out by joining the gas diffusion members 33, 35 and the separators 24, 25 while increasing the area of contact therebetween, using a molten base material provided by at least one of the gas diffusion members 33, 35 and separators 24, 25, and/or a molten filler material. The assembling process of step S600 may include a step of providing the above-mentioned seal members, such as gaskets, in the peripheral portion of the stacked structure, and a step of forming coolant channels between adjacent unit cells.

In the case where coolant channels, or the like, are not formed between adjacent unit cells, the gas diffusion members 33, 35 of the gas diffusion layers 22, 23 of adjacent cells may be joined to the opposite surfaces of the separator between the cells. Namely, the cells may be stacked and joined together such that each separator is shared by the cells located on the opposite sides of the separator.

Next, the evaluation of the fuel cell produced as described above will be explained. For the evaluation, a cell element of this embodiment, in which the gas diffusion layers 22, 23 are joined to the membrane electrode assembly 21 produced according to the process as shown in FIG. 2, and a cell element of a comparative example, in which the gas diffusion layers 22, 23 are joined to the membrane electrode assembly 21 produced according to a process similar to that of FIG. 2 but not including step S120 and step S130, were used. Since each of these cell elements constitutes the principal part of the power generation unit of the fuel cell, the evaluation using the cell element may be considered as equivalent to the evaluation of the actual fuel cell. In this case, the size of each of the cell elements was 5cm x 5cm, and a single sheet of carbon paper was used for the gas diffusion layer 22, 23. In both the embodiment and the comparative example, the thermocompression bonding (joining) of the gas diffusion layers to the membrane electrode assembly was conducted at a temperature of 130°C and a pressure of 2MPa.

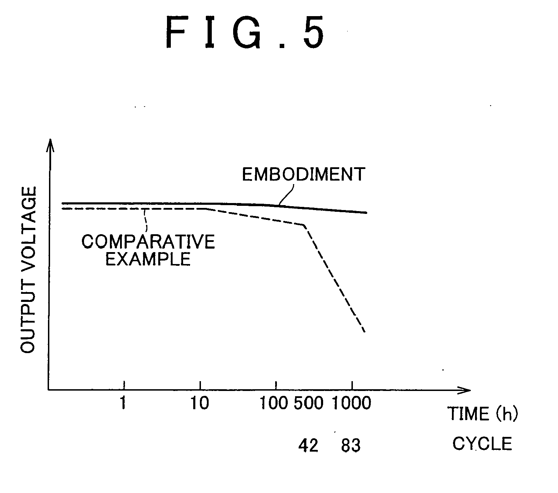

The cell element of the embodiment and that of the comparative example obtained as described above were set in an experimental arrangement or equipment (not shown) capable of supplying fuel gas, and a durability test was conducted in which a surface pressure applied to the actual fuel cell was applied to each of the cell elements through the experimental arrangement. In one cycle of the durability test, the cell element was continuously operated (discharged) for 12 hours at a load of a current density of 0.1 A/cm², and the operation was then halted or stopped for 12 hours. This cycle of operation and halting was repeatedly executed, and the output voltage upon discharge was measured for each cumulative operating time. During the continuous operation in the durability test, air was supplied to the cathode-side gas diffusion layer 22 under certain conditions (a temperature of 80°C, a dew point of 70°C, and 1.5 atmospheric pressure), and 100% hydrogen gas was supplied to the anode-side gas diffusion layer 23 under certain conditions (a temperature of 80°C, a dew point of 80°C, and 1.5 atmospheric pressure). FIG. 5 is a graph indicating changes in the output voltage with time, with respect to the cell element of the embodiment and the cell element of the comparative example. In FIG. 5, the horizontal axis is a logarithmic axis on which the cumulative operating time is indicated logarithmically.

As shown in FIG. 5, in the cell element of the comparative example, a significant reduction in the output voltage appeared when the cumulative operating time became about 500 hours, namely, when the above-mentioned cycle of operation and halting was repeated about 42 times (i.e., about 42 cycles were executed), and the output voltage was reduced to about 50% of the initial output voltage when the cumulative operating time became about 1,000 hours (equivalent to about 83 cycles). In the cell element of this embodiment, on the other hand, about 95% of the initial output voltage was maintained even when the cumulative operating time became about 1,000 hours (equivalent to about 83 cycles). It may be concluded from these results that the above difference in the durability appeared due to the chemical bonding of the hydrophobic-group containing compound (in this case, (1,1-diphenyl-4-pentenyl) benzene), which is the only difference between the cell element of this embodiment and that of the comparative example, and that the cell element of this embodiment having electrodes containing the Pt-loaded carbon particles to which (1,1-diphenyl-4-pentenyl) benzene is chemically bound can maintain the cell performance for a prolonged period of time.

In order to specify a cause of the above-described changes in voltage, i.e., the voltage reduction in the cell element of the comparative example, the cathode-side electrode (i.e., the electrode 32 in FIG. 1) of each of the cell element of this embodiment and that of the cell element of the comparative example were observed with an electron microscope. As a result of the microscopic observation, it was found that the thickness of the cathode-side electrode (the electrode 32 in FIG. 1) was reduced about 30% in the cell element of the comparative example after the 1,000-hour durability test was conducted. In the cell element of this embodiment, on the other hand, substantially no change in the thickness of the cathode-side electrode (the electrode 32 in FIG. 1) was observed after the 1,000-hour durability test was conducted.

It is deemed rational or reasonable that a main cause of the reduction in the electrode thickness is a loss of the Pt-loaded carbon particles loaded with the catalyst particles involved in an electrochemical reaction, due to corrosion thereof, and that the difference in the durability between the cell element of this embodiment and that of the comparative example appeared due to the loss of the Pt-loaded carbon particles in the comparative example. It is also deemed rational or reasonable that the loss of the Pt-loaded carbon particles occurred due to corrosion of the Pt-loaded carbon particles exposed to water at a high potential. In both of the cell element of the comparative example and that of this embodiment, the same electrolyte membrane was used, and the same catalyst, carbon particles and electrolyte (Nafion solution) were used in the electrodes. The only difference between these cell elements is in the presence of the chemical bonding of (1,1-diphenyl-4-pentenyl) benzene to the Pt-loaded carbon particles. Thus, in the cell element of this embodiment, (1,1-diphenyl-4-pentenyl) benzene containing the hydrophobic functional group (i.e., benzene group) was chemically bound to the Pt-loaded carbon particles so as to repel water from the Pt-loaded carbon particles, whereby the durability, or resistance to corrosion, of the Pt-loaded carbon particles was enhanced, and the cell performance was maintained for a long period of time. Furthermore, since (1,1-diphenyl-4-pentenyl) benzene has a high-volume molecular structure, access of water to the Pt-loaded carbon particles was more reliably limited or prevented due to the presence of the hydrophobic functional group (benzene group), thus assuring further improved durability (resistance to corrosion) of the Pt-loaded carbon particles, whereby the cell element of this embodiment surely maintained the cell performance over the prolonged period of time.

As explained above, according to this embodiment in which (1,1-diphenyl-4-pentenyl) benzene containing the hydrophobic functional group (benzene group) is chemically bound to the Pt-loaded carbon particles used in the preparation of the electrolyte solution (electrode forming paste) for forming the electrodes, the Pt-loaded carbon particles having excellent durability or resistance to corrosion can be easily produced. In addition, the use of the electrolyte solution (electrode forming paste) in which the Pt-loaded carbon particles having high durability or corrosion resistance are dispersed, and the formation of the electrodes from the electrode forming paste, make it possible to easily manufacture fuel cells that can maintain the cell performance for a long period of time.

Since (1,1-diphenyl-4-pentenyl) benzene containing the hydrophobic functional group (benzene group) is chemically bound to the carbon particles that have been loaded with the catalyst (Pt), the chemical bonding has no influence on the loading of the catalyst. With the loading of the catalyst thus ensured, the resulting electrodes do not suffer from a lack of the catalyst, and the fuel cell in which the electrodes 31, 32 including the Pt-loaded carbon particles are joined to the electrolyte layer 30 ensures its cell performance with high reliability.

While one embodiment of the invention has been described above, it is to be understood that the invention is not limited to the illustrated embodiment or examples, but may be embodied in various forms, without departing from the principle of the invention. For example, the preparation of the electrolyte-dispersed solution (step S150) may be performed under a reduced pressure. In this manner, air attached to the carbon particles can be removed, which desirably promotes covering of the carbon particles with the electrolyte. Also, air is removed from the solvent, and the organic solvent is prevented from being oxidized by the catalyst.

While the Pt-loaded carbon particles of this embodiment are particularly suitably used as a catalyst-loaded support (Pt-loaded carbon particles) contained in electrodes of polymer electrolyte fuel cells, the use or application of the carbon particles is not limited to that of the embodiment, but the Pt-loaded carbon particles of the invention may be used as catalyst-loaded supports (Pt-loaded carbon particles) contained in electrodes used in various types of electrochemical devices (e.g., a hydrogen generating apparatus in which the electrolysis of water occurs).

## Claims

1. A catalyst-loaded support contained in an electrode joined to an electrolyte membrane of a polymer electrolyte fuel cell, **characterized by** comprising:
a support particle having electrical conductivity, which is to be loaded with a catalyst;
a fine catalyst particle as said catalyst supported on a surface of the support particle;
a hydrophobic-group containing compound including a hydrophobic functional group, which is chemically bound to the support particle on a surface region of the support particle on which the catalyst particle is not supported, such that the hydrophobic functional group exists above the surface of the support particle.

2. The catalyst-loaded support according to claim 1, wherein the support particle is a carbonaceous particle.

3. The catalyst-loaded support according to claim 1 or 2, wherein the hydrophobic-group containing compound has a high-volume molecular structure.

4. The catalyst-loaded support according to any one of claims 1-3, wherein the hydrophobic-group containing compound contains a functional group selected from the group consisting of a tertiary butyl group, a benzene group, a naphthalene group, a triphenyl group, a fluorenyl group, and substituents thereof, as said hydrophobic functional group.

5. The catalyst-loaded support according to any one of claims 1-4, wherein the hydrophobic-group containing compound is (1,1-diphenyl-4-pentenyl) benzene.

6. A method of producing a catalyst-loaded support contained in an electrode joined to an electrolyte membrane of a polymer electrolyte fuel cell, **characterized by** comprising:
introducing the hydroxyl group into a surface region of the support particle on which the catalyst particle is not supported by subjecting an electrically conductive, support particle loaded with a fine catalyst particle, to a treatment for introducing a hydroxyl group into the support particle; and
chemically binding a hydrophobic-group containing compound containing a hydrophobic functional group to the support particle, through a polymerization reaction between the hydrophobic-group containing compound and the hydroxyl group that has been introduced into the surface region of the support particle.

7. A method of producing an electrolyte solution used for forming an electrode joined to an electrolyte membrane of a polymer electrolyte fuel cell, **characterized by** comprising:
preparing an electrically conductive, catalyst-loaded support comprising support particles loaded with fine catalyst particles, according to the method of claim 6; and
mixing the catalyst-loaded support and a proton-conducting electrolyte with a solvent, to prepare an electrolyte-dispersed solution in which the support particles loaded with the catalyst particles are dispersed.

8. A polymer electrolyte fuel cell, **characterized by** comprising:
an electrolyte membrane; and
an electrode joined to the electrolyte membrane, wherein
the electrode is formed on a surface of the electrolyte membrane, using the electrolyte-dispersed solution produced according to the method of claim 7.

9. A method of producing a polymer electrolyte fuel cell, **characterized by** comprising:
preparing an electrolyte membrane;
preparing an electrically conductive, catalyst-loaded support comprising support particles loaded with fine catalyst particles, according to the method of claim 6;
mixing the catalyst-loaded support and a proton-conducting electrolyte with a solvent, to prepare an electrolyte-dispersed solution in which the support particles loaded with the catalyst particles are dispersed; and
applying the prepared electrolyte-dispersed solution by coating to a surface of the electrolyte membrane, and drying the solution so as to form an electrode on the surface of the electrolyte membrane.
